# EUROPEAN PATENT APPLICATION

(11) **EP 4 321 250 A1**
(43) Date of publication of application: **14.02.2024**
(21) Application number: 22189250.8
(22) Date of filing: 08.08.2022
(51) Int. Cl.: B01L 9/00

(54) **TIP PACKAGE**

(71) Applicant: Sartorius Biohit Liquid Handling Oy, 00880 Helsinki (FI)
(72) Inventor: KUITUNEN, Tuomas, 00880 Helsinki (FI); HINTIKKA, Ville, 00880 Helsinki (FI)
(74) Representative: Laine IP Oy

(57) **Abstract**

According to an example aspect of the present invention, there is provided a box-shaped tip package (1) comprising a rigid frame (2) having at least one side opening (3, 4, 5, 6) and/or a bottom opening (7), and a top opening (8). The box-shaped tip package (1) has thin film material (11, 12, 13) covering the at least one side opening (3, 4, 5, 6) and/or the bottom opening (7). The tip package (1) is configured to receive a tip tray (9) onto the rigid frame (2) and is configured to withstand tip picking forces.

## Description

### FIELD

The present invention relates to tip packages, and more particularly tip packages comprising thin film material.

### BACKGROUND AND OBJECTS

Containers, such as tip packages, are used for storing, transporting and dispensing pipette tips. The tip packages have a box-shaped solid structure onto which a tip tray can be mounted. The tip package provides support for the pipette tips to be mounted on a manual or an automatic pipette. They are designed to withstand high picking forces of the tips. In addition, the tip package prevents contamination of the items in the package.

Generally, tip packages are made of plastic material, such as polypropylene or polytetrafluoroethylene, and comprise solid side panels and a bottom panel. Thus, manufacturing of the tip packages requires a lot of raw materials and used tip packages create a high amount of plastic waste. Moreover, packing of the used tip packages for recycling is difficult because a box-shaped package take up a lot of room. An aim of the present invention is thus to improve structures and recyclability of the tip packages. A further aim of the present inventions is to provide a tip package, which requires less plastic to manufacture and takes up less room when packing for recycling.

### SUMMARY OF THE INVENTION

According to a first aspect of the present invention, there is provided a box-shaped tip package comprising:
- a rigid frame having:
   - at least one side opening and/or a bottom opening, and
   - a top opening; and
- thin film material covering the at least one side opening and/or the bottom opening,
   which tip package is configured to receive a tip tray onto the rigid frame and is configured to withstand tip picking forces.

According to a second aspect of the present invention, there is provided a method for manufacturing a box-shaped tip package, comprising:
- forming of a rigid frame having at least one side opening and/or a bottom opening, and a top opening by injection moulding,
- placing a thin film material on an inner surface or an outer surface of the tip-package to cover the at least one side opening and/or the bottom opening of the tip package, and
- attaching the thin film material to the rigid frame, for example, by in-mould labelling, heat sealing, ultrasonic welding or an adhesive.

### BRIEF DESCRIPTION OF THE DRAWINGS

FIGURE 1 illustrates a box-shaped tip package in accordance with at least some embodiments of the present invention;
FIGURE 2a illustrates a tip package, a thin film material and a tip tray in accordance with at least some embodiments of the present invention;
FIGURE 2b illustrates a tip package having a thin film material placed on an inner surface of the tip package in accordance with at least some embodiments of the present invention;
FIGURE 3a illustrates a tip package, a tip tray on the tip package, and a thin film material in accordance with at least some embodiments of the present invention;
FIGURE 3b illustrates a tip package having a thin film material on an outer surface of the tip package in accordance with at least some embodiments of the present invention;
FIGURE 4a illustrates a tip package, a tip tray on the tip package, and a thin film material in accordance with at least some embodiments of the present invention; and
FIGURE 4b illustrates a tip package having a thin film material on an outer surface of the tip package in accordance with at least some embodiments of the present invention.

### EMBODIMENTS

In the present context, the term "tip" typically refers to a tip for a liquid handling device.

In one embodiment, the tip is a disposable tip for a liquid handling device, preferably a plastic disposable tip for a liquid handling device.

The liquid handling device may be a hand-held liquid handling device or an automated liquid handling device. In one embodiment, the liquid handling device is a pipette, typically an air displacement pipette, such as an electronic pipette or a mechanical pipette. In another embodiment, the liquid handling device is an automated liquid handling robot. The liquid handling device may be a single-channel device or a multi-channel device.

In the present context, the expression "tip picking forces" refers to forces exerted on a tip package by a liquid handling device upon picking a tip or tips from the tip package, typically from a tip tray therein, by the liquid handling device.

In the present context, the term "tip tray" typically refers to a plate comprising a plurality of openings, each opening being configured to receive and hold a tip.

In the present context, the term "breathable material" means that air can pass through the breathable material while simultaneously contaminating particles and like are filtrated and prevented from passing through the breathable material.

In the present context, the term "thin film material" means a very thin sheet of material, such as a paper based material. The thickness of the thin film material can be, for example, 10 to 500 µm.

According to some embodiments, a box-shaped tip package 1 comprises a rigid frame 2. The rigid frame 2 has at least one side opening 3, 4, 5, 6 and/or a bottom opening 7. The rigid frame has a top opening 8. The box-shaped tip package 1 has thin film material 11, 12, 13 covering the at least one side opening 3, 4, 5, 6 and/or the bottom opening 7. The tip package 1 is configured to receive a tip tray 9 onto the rigid frame 2. The frame 2 is configured to withstand tip-picking forces.

The thin film material covering the at least one side opening and/or the bottom opening makes the structure of the tip package more rigid. So, the tip package withstands high picking forces of the tips. The rigidity of the frame is so great that the frame withstand tip-picking forces without breaking or collapsing. The thin film material provides a good microbial barrier. Thus, it prevents contamination of the items in the package. The thin film material enables gases and vapors that are used in sterilization, such as in ethylene oxide (ETO) gas sterilization, to pass through the material. In addition, the thin film material enables gases and vapor to ventilate fast away before the products can be released for sale. Placing the thin film material at least one side and/or the bottom opening of the tip package ensures excellent access of the sterilizing gas to and from the package. The tip package requires less plastic to manufacture than generally used tip packages. Thus, it is ecological to manufacture and causes less plastic waste. Furthermore, the amount of material to be sterilized affects a size of a radiation dose to be used. Therefore, material reduction of the frame enables of using smaller doses during sterilizing. Using of the smaller doses is recommended, because high doses can make the tips fragile and thus impair their performance.

Preferably, the tip package 1 is rigid at least in a direction of the tip picking.

Preferably, the rigid frame 2 comprises at least the bottom opening 7.

In addition, the rigid frame 2 may comprise the at least one side opening 3, 4, 5, 6. The rigid frame 2 can comprise one to four side openings 3, 4, 5, 6.

A form of the opening 3, 4, 5, 6, 7, 8 can be for example, rectangle or square.

The openings 3, 4, 5, 6, 7, 8 can be formed in the middle of the sides of the package 1. Thus, the rigid frame 2 can surround the opening on all sides. The rigid frame 2 surrounding the opening on all sides make the structure of the tip package more durable. Thus, the tip package has better resistance to tip picking forces.

A size of the opening 3, 4, 5, 6, 7, 8 covered by the thin film material 11, 12, 13 may be at least 70 %, preferably 75-95 %, of a size of a side or the bottom of the tip package. This enables sufficient sterilization of the tip package.

The rigid frame 2 can be made of virgin or recycled polypropylene or polytetrafluoroethylene. In addition, bio-composites can be used.

The rigid frame 2 can be manufactured by injection moulding.

The thin film material 11, 12, 13 of the package can be made of a breathable material, such as a paper-based material. The breathable material prevents the package from swelling. Breathability also helps the package to withstand large fluctuations in pressure or temperature so that the package cannot swell. The breathable material shall preferably have sufficient filtering properties so that the purity of the products is not impaired. Suitable paper based materials comprise for example, Tyvek and medical grade papers.

Tyvek is an advantageous material as it provides a good microbial barrier. Thus, it prevents contamination of the items in the package. At the same time, it still prevents the package from swelling due to its breathability. Breathability also helps the package to withstand large fluctuations in pressure or temperature so that the package cannot swell.

A porous fiber structure of Tyvek enables gases and vapors that are used in sterilization, such as in ethylene oxide (ETO) gas sterilization, to pass through the material. In addition, Tyvek enables gases and vapor to ventilate fast away before the products can be released for sale. Placing Tyvek film on the several sides of the tip package ensures excellent access of the sterilizing gas to and from the package.

A thickness of the thin film material 11, 12, 13 can be for example, 10 to 500 µm, preferably 100-250 µm.

The thin film material 11, 12, 13 may comprise a radio frequency identification (RFID) tag. Then, the tip package 1 can be identified and tracked for example, during the sterilization process of the tip package.

The thin film material 11, 12, 13 may comprise a temperature sensor. Then, a temperature of the tip package can be measured.

The thin film material 11, 12, 13 may comprise a hologram. Then, the tip package can be identified.

The thin film material 11, 12, 13 may comprise a sterilization indicator, such as a strip or a tape. The sterilization indicator enables monitoring of the sterilization process of the tip package. The sterilization indicator indicates whether the conditions during sterilization were adequate to achieve a defined level of microbial inactivation.

According to some embodiments, the thin film material 11, 12, 13 is attached to the rigid frame 2 by in-mould labelling during injection moulding of the frame, or by heat sealing, ultrasonic welding, gluing or taping after manufacturing of the rigid frame 2. The methods seals the thin film material tightly against the frame, which prevents contamination of the items in the package.

According to some embodiments, the tip package 1 is collapsible after puncturing the thin film material 11, 12, 13. Therefore, it takes only a little room when packed for the recycling.

In addition or alternatively, the thin film material 11, 12, 13 can be removed after the use. The thin film material can be removed by tearing it of the rigid frame. Then, the thin film material and the plastic frame can be recycled separately.

According to some embodiments, the thin film material 11, 12, 13 comprises a tear element (not illustrated) for puncturing the thin film material 11, 12, 13 covering the side openings 3, 4, 5, 6 and/or the bottom opening 7 of the tip package 1. The tear element enables puncturing of the thin film material with a low effort for example, by pressing with a finger the thin film material at the point of the tear element. Then, the punctured tip package can be easily pressed flat. So, it takes only a little room when packed for the recycling.

The tear element can be for example, a hole or a plurality of holes arranges in a form of a line or a circle.

The tear element can be formed to the thin material for example, in the middle of the openings of the frame.

The tear element can be manufactured by for example, laser perforation. Laser perforation enables fast and accurate forming of the tear element.

A material thickness of the frame 2 can be reduced (not illustrated) from corners of the tip package 1 for pressing the tip package flat. For example, the corners of the tip package may comprise elongated grooves in a longitudinal direction of the corners. This enables pressing the tip package easily flat.

According to some embodiments, the thin film material 11 is in a form of a cup-shaped continuous film, which is placed on an inner surface or an outer surface of the tip package 1. So, thin film material 11 covers the side openings 3, 4, 5, 6 and the bottom opening 7. The cup-shaped continuous film makes the structure of the tip package more rigid. So, the tip package withstands high picking forces of the tips. Moreover, attaching the cup-shaped continuous film tightly against the frame and sealing the seams of the cup-shaped continuous film prevents contamination of the items in the package. When attaching the cup-shaped continuous film on the inner surface of the tip package, the material of the rigid frame would not be so important for the purity of the products. Thus, the rigid frame can be made of, for example, recycled plastic or bio-composite.

The cup-shaped continuous film can be attached directly on the inner surface or the outer surface of the tip package and formed to the cup-shape using the frame of the tip package as a part of the mold.

The cup-shaped continuous film can be attached to the rigid frame by heat sealing or ultrasonic welding after manufacturing the frame. The cup shaped continuous film can be attached to the frame at least its upper edge. Attaching the thin film material tightly against the frame prevents contamination of the items in the package.

According to some embodiments, the thin film material 12 is in a form of a planar film, which comprise a bottom part and four side parts connected to the bottom part, which bottom part is placed to cover the bottom opening 7 of the tip package 1 and the four side parts are placed to cover the side openings 3, 4, 5, 6 of the tip package 1 on an outer surface of the tip package 1. The planar film makes the structure of the tip package more rigid. So, the tip package withstands high picking forces of the tips. The planar film is easy to manufacture, because it can be easily cut from a sheet of material.

Alternatively, the planar thin film material 13 can be placed on the inner surface of the package.

The planar film can be attached firmly of its each edge to the rigid frame 2.

The planar film can be attached to the frame by in-mould labelling (IML) during the manufacturing of the frame. Alternatively, the planar film can be attached to the rigid frame by heat sealing, ultrasonic welding or by an adhesive after manufacturing the frame. The adhesive can be a glue, such as a biodegradable glue.

According to some embodiments, the thin film material is in a form of panels (not illustrated), which are placed to cover the bottom opening 7 and /or the side openings 3, 4, 5, 6 of the tip package 1 on an outer surface of the tip package 1. The panels makes the structure of the tip package more rigid. So, the tip package withstands high picking forces of the tips. The panels enable of covering only of some parts of the tip package. So, less thin film material is needed when the tip package has only one or few openings, because only the openings can be covered by the panels.

When the tip package 1 has only the top opening 8 and the bottom opening 7, only the bottom opening 7 may be covered by the panel of the thin film material.

The panels can be attached to the rigid frame 2 by heat sealing, ultrasonic welding, taping or gluing after manufacturing the frame.

According to some embodiments, the tip package 1 may further comprise a box-shaped cover (not illustrated). The cover can comprise a rigid frame having at least one side opening, a bottom opening and/or a top opening, and thin film material covering the at least one side opening and/or the bottom opening. The cover is configured to be positioned on the package so that the top opening of the cover faces and covers the top opening of the package.

The cover may be articulated attached to the tip package 1. Thus, the cover may be attached to the tip package by a hinges, which connects the cover to the frame. Thus, the cover can be easily flipper to the side before picking the tips from the tip package.

Alternatively, the cover may be a separate part. Thus, the cover is not attached to the tip package 1. Then, the cover can be lifted aside before picking the tips from the tip package.

An interface between the cover and the tip package 1 can be sealed. The interface can be sealed by a gas-tight seal. The gas-tight seal can be located in the interface between the cover and the frame. The sealing prevents substantially all gas exchange between the interior space of the package and the surroundings.

The cover can be made of virgin or recycled polypropylene or polytetrafluoroethylene. In addition, bio-composites can be used. The cover can be manufactured by injection moulding.

Thin film material can cover the side openings and/or the top opening of the cover.

The thin film material of the cover can made of a breathable material, such as a paper based material. Suitable paper based materials comprise for example, Tyvek and medical grade papers. The breathable material prevents the package from swelling. Breathability also helps the package to withstand large fluctuations in pressure or temperature so that the package cannot swell.

According to some embodiments, the cover is collapsible after puncturing the thin film material. So, it takes only a little room when packed for the recycling.

According to some embodiment, the thin film material of the cover comprises a tear element for puncturing the thin film material covering the side openings and/or the top opening of the cover. The tear element enables puncturing of the thin film material with a low effort for example, by pressing with a finger the thin film material at the point of the tear element. Then, the punctured cover can be easily pressed flat. So, it takes only a little room when packed for the recycling.

The thin film material of the cover can be in a form of a cup-shaped continuous film, a planar film or panels.

The cover may comprise a puncturing element for puncturing the thin film material 11, 12, 13 of the tip package 1. For example, the cover may comprise a tooth protruding at a corner of the cover. Then, the cover may be detached from the tip package 1 and the cover may be used for puncturing the thin film material of the tip package.

According to one embodiment, a method for manufacturing a box-shaped tip package 1 comprises:
- forming of a rigid frame 2 having at least one side opening 3, 4, 5, 6 and/or a bottom opening 7, and a top opening 8 by injection moulding,
- placing a thin film material 11, 12, 13 on an inner surface or an outer surface of the tip-package 1 to cover the at least one side opening 3, 4, 5, 6 and/or the bottom opening 7 of the tip package, and
- attaching the thin film material 11, 12, 13 to the rigid frame 2, for example, by in-mould labelling, heat sealing, ultrasonic welding or an adhesive.
The method provides a simple and a cost-effective way to produce the tip package. Producing of the frame first and then placing the thin film material on the frame enables of using different materials in a production of the frame and the thin film material. Thus, less plastic can be used to manufacture the tip package.

The adhesive used to attaching the thin film material 11, 12, 13 to the rigid frame 2 can be glue.

### DETAILED DESCRIPTION OF THE DRAWINGS

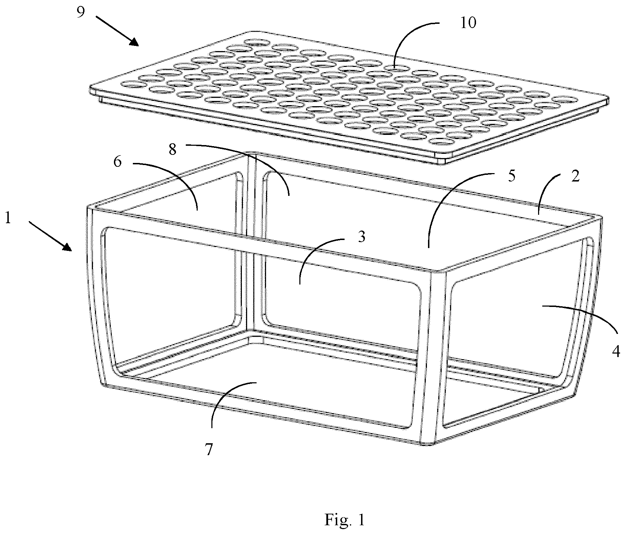

FIGURE 1 illustrates a box-shaped tip package 1. The box-shaped tip package 1 comprises a rigid frame 2 having four side openings 3, 4, 5, 6, a bottom opening 7 and a top opening 8. The tip package 1 is configured to receive a tip tray 9 onto the rigid frame 2. The tip tray 9 comprises a plurality of openings 10 for receiving tips.

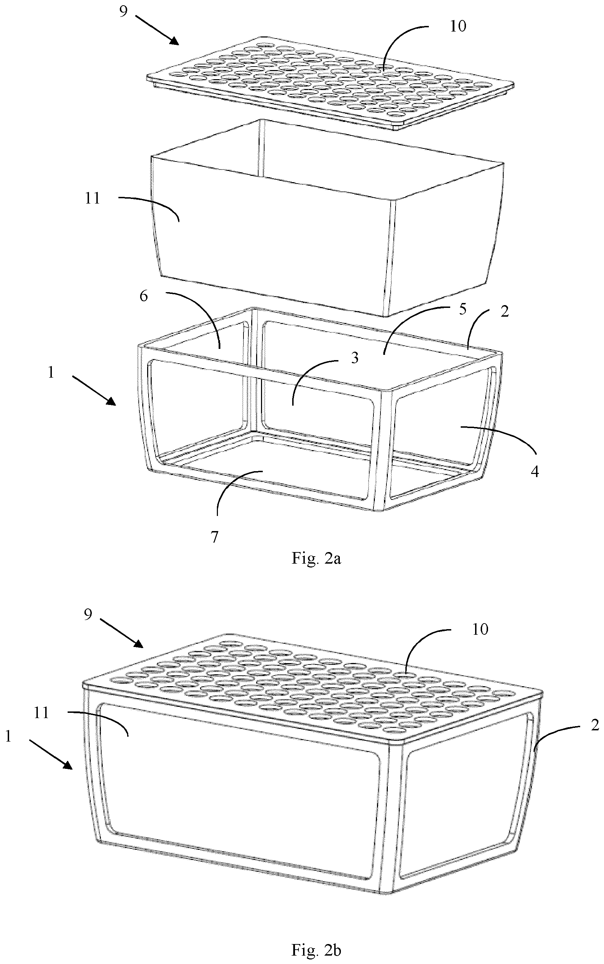

FIGURE 2a illustrates a tip package 1, a thin film material 11 and a tip tray 9. The thin film material 11 is in a form of a cup-shaped continuous film. The thin film material 11 is configured to be attached inside the tip package. The tip tray 9 has a plurality of openings 10 for receiving tips.
FIGURE 2b illustrates the tip package 1 having the thin film material 11 placed on an inner surface of the tip package 1. The thin film material 11 is a cup-shaped continuous film. The thin film material 11 covers the side openings 3, 4, 5, 6 and the bottom opening 7.

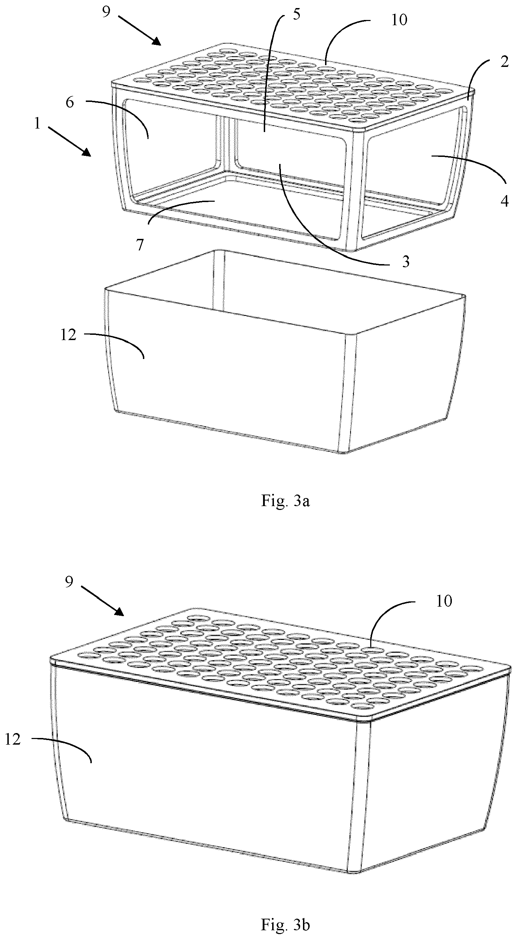

FIGURE 3a illustrates a tip package 1, a tip tray 9 on the tip package 1, and a thin film material 12. The tip tray 9 has a plurality of openings 10 for receiving tips. The thin film material 12 is in a form of a cup-shaped continuous film.
FIGURE 3b illustrates a tip package 1 having a thin film material 12 on an outer surface of the tip package 1. The thin film material 12 is a cup-shaped continuous film. The thin film material 12 covers the side openings 3, 4, 5, 6 and the bottom opening 7.

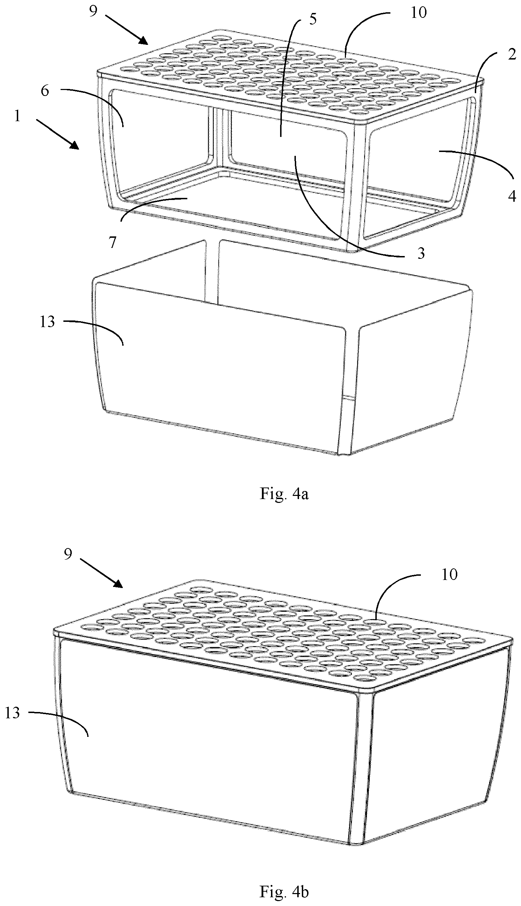

FIGURE 4a illustrates a tip package 1, a tip tray 9 on the tip package 1, and a thin film material 13. The tip tray 9 has a plurality of openings 10 for receiving tips. The thin film material 13 is in a form of a planar film. The planar film comprises a bottom part and four side parts connected to the bottom part. The bottom part is configured to be placed to cover the bottom opening 7 of the tip package 1. The fours side parts are configured to be placed to cover the side opening 3, 4, 5, 6 of the tip package.
FIGURE 4b illustrates a tip package 1 having a thin film material 13 on an outer surface of the tip package 1. The thin film material 13 is a planar film. The thin film material 13 covers the side openings 3, 4, 5, 6 and the bottom opening 7.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Furthermore, the described features, structures, or characteristics may be combined in any suitable manner in one or more embodiments. In the description, numerous specific details are provided, such as examples of lengths, widths, shapes, etc., to provide a thorough understanding of embodiments of the invention.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

### REFERENCE SIGNS LIST

- 1: tip package
- 2: frame
- 3-6: side openings
- 7: bottom opening
- 8: top opening
- 9: tip tray
- 10: opening
- 11-13: thin film material

## Claims

1. A box-shaped tip package (1) comprising:
- a rigid frame (2) having:
- at least one side opening (3, 4, 5, 6) and/or a bottom opening (7), and
- a top opening (8); and
- thin film material (11, 12, 13) covering the at least one side opening (3, 4, 5, 6) and/or the bottom opening (7),
which tip package (1) is configured to receive a tip tray (9) onto the rigid frame (2) and is configured to withstand tip picking forces.

2. The box-shaped tip package (1) of claim 1, which tip package (1) is collapsible, for example after puncturing the thin film material (11, 12, 13).

3. The box-shaped tip package (1) according to any one of the preceding claims, wherein the thin film material (11, 12, 13) comprises a tear element for puncturing the thin film material (11, 12, 13) covering the side openings (3, 4, 5, 6) and/or the bottom opening (7) of the tip package (1).

4. The box-shaped tip package (1) according to any one of the preceding claims, wherein the thin film material (11) is in a form of a cup-shaped continuous film, which is placed on an inner surface or an outer surface of the tip package (1).

5. The box-shaped tip package (1) according to claims 1 to 3, wherein the thin film material (12) is in a form of a planar film, which comprise a bottom part and four side parts connected to the bottom part, which bottom part is placed to cover the bottom opening (7) of the tip package (1) and the four side parts are placed to cover the side openings (3, 4, 5, 6) of the tip package (1) on an outer surface of the tip package (1).

6. The box-shaped tip package (1) according to claims 1 to 3, wherein the thin film material (13) is in a form of panels, which are placed to cover the bottom opening (7) and /or the side openings (2) of the tip package (1) on the outer surface of the tip package (1).

7. The box-shaped tip package (1) according to any one of the preceding claims, wherein the thin film material (11, 12, 13) is attached to the rigid frame (2) by in-mould labelling during injection moulding of the frame, or by heat sealing, ultrasonic welding, gluing or taping after manufacturing of the rigid frame (2).

8. The box-shaped tip package (1) according to any one of the preceding claims, comprising a box-shaped cover, which cover comprises:
- a rigid frame having at least one side opening, a bottom opening and/or a top opening, and
- thin film material covering the at least one side opening and/or the bottom opening,
wherein the cover is configured to be positioned on the package so that the top opening of the cover faces and covers the top opening of the package.

9. The box-shaped tip package (1) of claim 8, which cover is collapsible after puncturing the thin film material.

10. The box-shaped tip package (1) according to any of the preceding claims 8 to 9, wherein the thin film material of the cover comprises a tear element for puncturing the thin film material covering the side openings and/or the top opening of the cover.

11. The box-shaped tip package (1) according to any one of the preceding claims, wherein the thin film material of the package and/or of the cover is made of a breathable material, such as a paper based material.

12. A method for manufacturing a box-shaped tip package (1), comprising:
- forming of a rigid frame (2) having at least one side opening (3, 4, 5, 6) and/or a bottom opening (7), and a top opening (8) by injection moulding,
- placing a thin film material (11, 12, 13) on an inner surface or an outer surface of the tip-package (1) to cover the at least one side opening (3, 4, 5, 6) and/or the bottom opening (7) of the tip package (1), and
- attaching the thin film material (11, 12, 13) to the rigid frame (2), for example, by in-mould labelling, heat sealing, ultrasonic welding or an adhesive.

13. The method according to claim 12, wherein the thin film material (11, 12, 13) comprises a tear element for puncturing the thin film material (11, 12, 13) covering side openings (3, 4, 5, 6) and/or a bottom opening (8) of the tip package (1).

14. The method according to any one of the preceding claims 12 to 13, wherein the thin film material (11, 12, 13) is made of a breathable material, such as a paper based material.

15. The method according to any one of the preceding claims 12 to 14 wherein the thin film material (11) is in a form of a cup-shaped continuous film, which is placed on an inner surface or an outer surface of the tip package (1).

16. The method according to any one of the preceding claims 12 to 15, wherein the thin film material (12) is in a form of a planar film, which comprise a bottom part and four side parts connected to the bottom part, which bottom part is placed to cover the bottom opening (7) of the tip package (1) and the four side parts are placed to cover the side openings (3, 4, 5, 6) of the tip package (1) on an outer surface of the tip package (1).

17. The method according to any one of the preceding claims 12 to 16, wherein the thin film material (13) is in a form of panels, which are placed to cover the bottom opening (7) and/or the side openings (3, 4, 5, 6) of the tip package (1).
